# EUROPEAN PATENT SPECIFICATION

(11) **EP 0 999 156 B1**
(45) Date of publication and mention of the grant of the patent: **20.10.2004**
(21) Application number: 99203629.3
(22) Date of filing: 03.11.1999
(51) Int. Cl.: B65G 57/14, B65G 37/00

(54) **Apparatus and method for automatic stacking of products on a pallet**
Vorrichtung und Verfahren zum automatischen Stapeln von Produkte auf Paletten
Dispositif et méthode pour l'empilage automatique de produits sur palettes

(30) Priority: 03.11.1998 NL 1010468
(43) Date of publication of application: 10.05.2000
(73) Proprietor: Nedpack, 3846 CE Harderwijk (NL)
(72) Inventor: Hannesen, Pieter Gerrit, 3843 JK Harderwijk (NL)
(74) Representative: Van Someren, Petronella F. H. M.

(56) References cited:
- EP-A- 0 216 235
- DE-A- 3 406 885
- DE-A- 3 739 130
- US-A- 3 844 422
- US-A- 4 439 084

## Description

The present invention relates to an apparatus for automatic stacking of products on a pallet as according to the preamble of claim 1 and a method for automatic stacking of products on a pallet as according to the preamble of claim 6.

Such an apparatus and method are known from US-A-3,844,422. This known apparatus for stacking products on a pallet comprises three elevator arms which form a pallet bearing surface. The arms are lowered during pallet loading operation. When the pallet reaches the discharge station, the arms are retracted for discharging the pallet. In retracted mode, the arms are returned to their initial, uppermost position for receiving an empty pallet for subsequent loading.

The apparatuses for automatic stacking of products on a pallet known from the prior art, also referred to as palletizers, are complicated. As a result palletizing is a complicated process with a long cycle time and the apparatus intended for this purpose has a low capacity.

The object of the present invention is to provide a simpler apparatus and method, wherein the costs and cycle time are reduced and capacity is increased.

An apparatus of the above-mentioned type is therefore characterized in that the transport means comprise two endless transporting members, the active part of which runs vertically, wherein two or more pallet bearing surfaces are provided per frame which are arranged at the endless transporting members and lie horizontally at least in the active part. A pallet lying in the horizontal plane is hereby loaded from above and simultaneously carried downward by a circulating movement of the transporting members in the vertical plane. While a loaded pallet on the first pallet bearing surface is being discharged or carried further downward for discharge, a subsequent pallet can already be loaded on a second pallet bearing surface. A capacity increase is hereby obtained.

Two frames with transporting members and bearing surface(s) are preferably disposed mirror-symmetrically relative to each other, wherein the bearing surfaces of the two frames lie at the same height at least in the active part. The bearing surfaces of the two frames together form a supporting surface for the pallet in the active part.

In a preferred embodiment the transporting members are formed by an endless chain with synchronously driven chain wheels. Such transporting members are very simple and inexpensive to manufacture and can be driven continuously.

If means are arranged for pivoting the bearing surface, the bearing surface can be pivoted in the inactive part such that the space occupied by the apparatus is minimal.

The supply station for pallets then preferably comprises means for lifting a stack of pallets. Thus is achieved that a pallet can be delivered from a stock of pallets directly onto the top of the frame.

In addition, the present invention relates to a method for automatic stacking of products on a pallet, consisting of supplying an empty pallet at high level onto a first pallet bearing surface provided on endless transporting members, placing one layer of products each time onto the pallet from above, wherein prior to supply of a subsequent layer of products the pallet is carried downward each time through a distance the height of the layer of products, and discharging the loaded pallet at low level. According to the invention the method is characterized in that prior to or during discharge of the loaded pallet a subsequent pallet is supplied onto a second pallet bearing surface, above the loaded pallet in order to be loaded.

Since discharge of a loaded pallet and loading of a subsequent pallet are performed simultaneously, an exceptionally short cycle time is obtained.

The invention will be further elucidated hereinbelow with reference to the annexed drawing. In the drawing:
fig. 1 shows a part of the apparatus as according to a first embodiment of the invention,
fig. 2 shows a part of the apparatus as according to a second embodiment,
fig. 3 shows a part of the apparatus as according to a third embodiment, and
fig. 4 shows a perspective view of an apparatus for automatic stacking of products on a pallet according to the present invention.

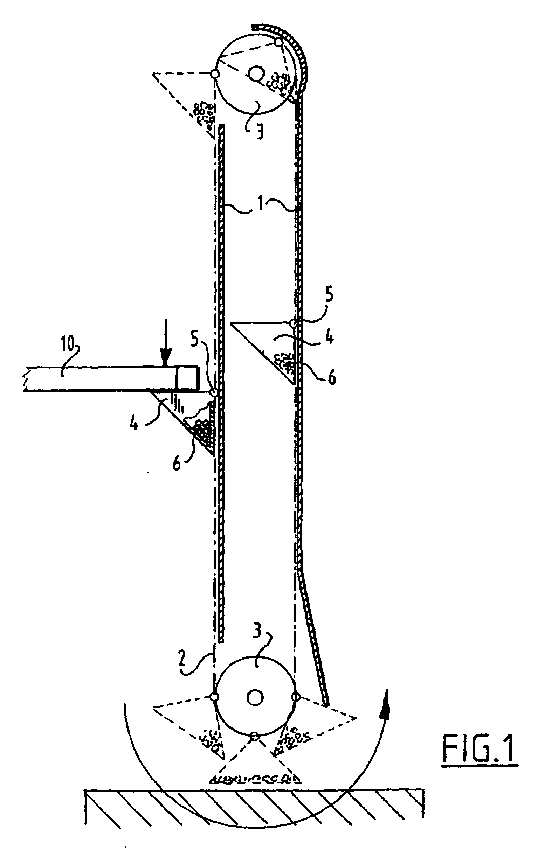

The first embodiment of the apparatus for automatic stacking of products on a pallet as according to fig. 1 comprises a frame not shown here. In the frame are supported endless transporting members in the form of an endless chain 2 with chain wheels 3. Two bearing surfaces 4 are pivotably connected to chain 2 at a point 5. Means 1 which can be formed integrally with the frame are further provided for guiding bearing surfaces 4. Bearing surfaces 4 have a triangular cross-section and provide a space for receiving loose elements 6 which together with the frame ensure the correct position of bearing surface 4. In the active part of the transporting members, in fig. 1 on the left-hand side, bearing surface 4 lies horizontally so that a pallet 10 can support thereon. In the inactive part the bearing surfaces 4 pivot under the influence of the force of gravity and guide means 1 to a position located between the transporting members.

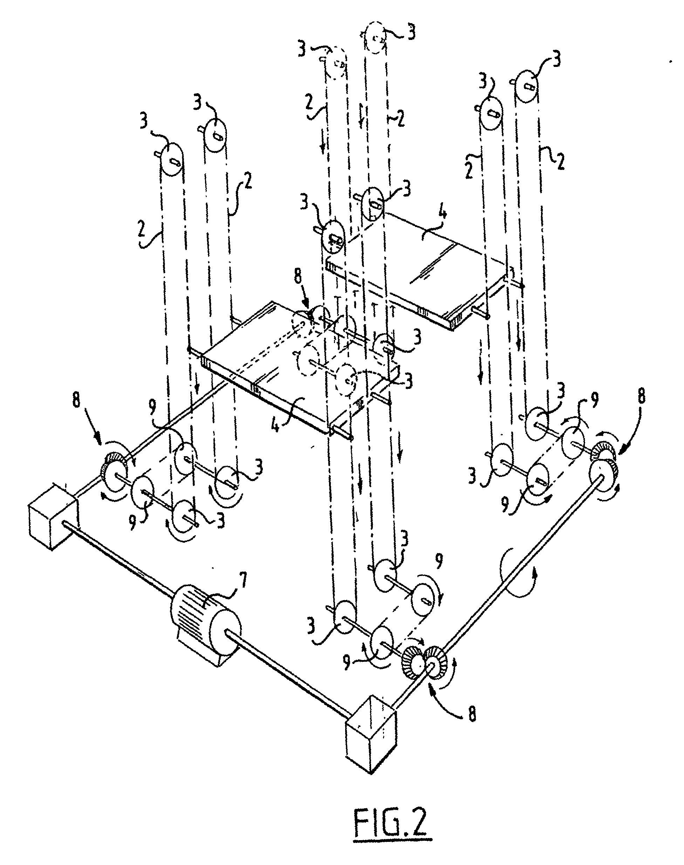

In the second embodiment of the apparatus according to the present invention of fig. 2, two frames (not shown) with transporting members, again in the form of chains 2 and chain wheels 3, and bearing surfaces 4 are disposed mirror-symmetrically relative to each other. This is done such that bearing surfaces 4 of the two frames lie at the same height at least in the active part, in fig. 2 between the two frames. Bearing surfaces 4 are formed by rectangular plate pieces. Supported per frame in this embodiment are four chains 2 on which bearing surfaces 4 are mounted using four connecting pieces. Bearing surfaces 4 are not pivotable and thus remain horizontal in both the active part and the inactive part. Chain wheels 3 are driven synchronously by a motor 7 and using couplings 8 and drive wheels 9.

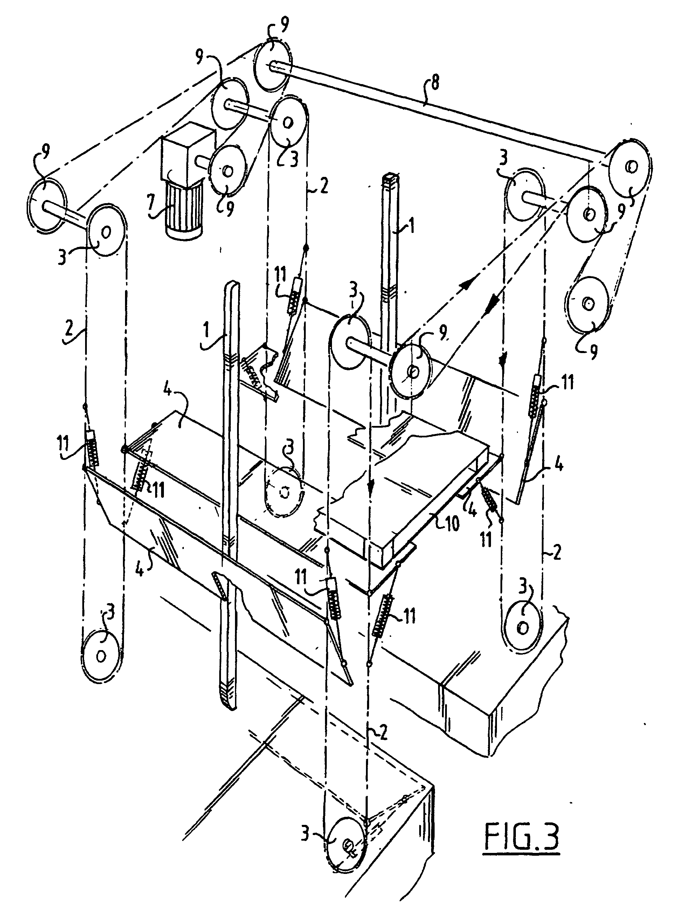

A third embodiment of the apparatus according to the present invention is shown in fig. 3 and, just as the second embodiment, comprises two frames with transporting members and two bearing surfaces 4 per frame. This figure shows clearly that the two bearing surfaces 4 of the two frames in the active part together form a supporting surface for a pallet 10. In the inactive part, in fig. 3 on the outside of the frame with transporting members, bearing surfaces 4 are pushed downward by guide means 1. This is possible since pivoting means 11, in the form of a piston with resetting spring, can be extended and are mounted pivotally on bearing surface 4 and chain 2. On the upper side of the transporting members the bearing surfaces 4 are pivoted back to a horizontal position by the resetting springs. Here also the transporting members in the form of chains 2 and chain wheels 3 are driven synchronously by a motor 7, drive wheels 9 and couplings 8.

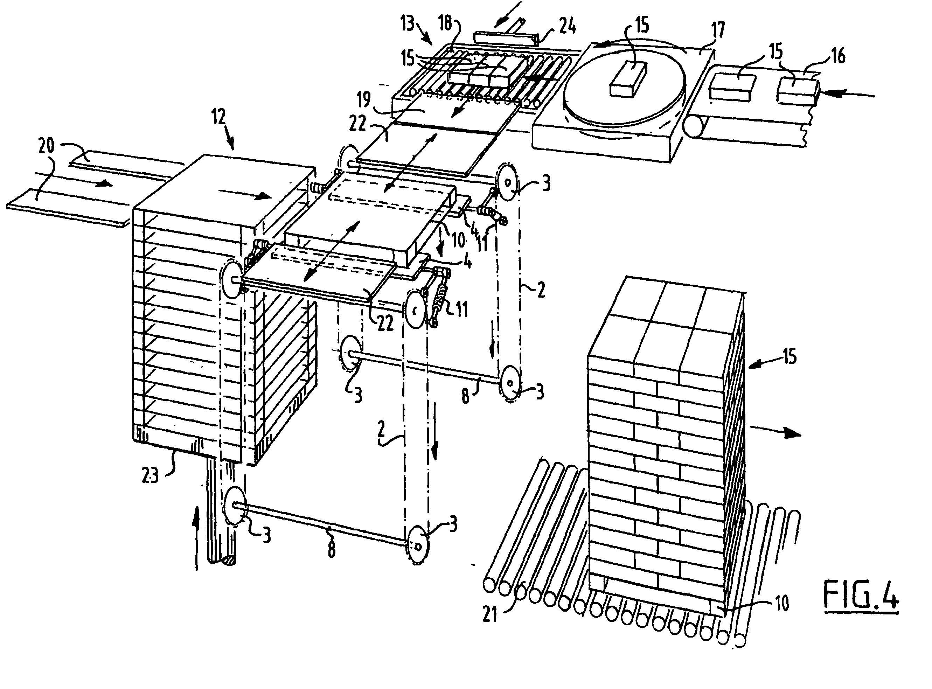

Fig. 4 shows a perspective view of the whole apparatus as according to the third embodiment of fig. 3. A supply station 12 for pallets 10 and a supply station 13 for products 15 are located on the top side, or at high level, relative to the frame and therefore the transporting members. Located at a lower level is a discharge station 21 for loaded pallets 10. The endless transporting members 2 supported in the frame carry pallets 10 for loading from supply station 12 to discharge station 21.

Supply station 13 for products 15 comprises a feed conveyor 16, a turning station 17, a roller conveyor 18, pushers 24, a parking plate 19 and shuttle plates 22. Products 15 arrive one by one over feed conveyor 16 and are rotated 90° on turning station 17 or simply continue straight on to roller conveyor 18. On roller conveyor 18 is now formed a row which is displaced using pushers 24 over parking plate 19 to the shuttle plates 22 which are shifted towards each other. The subsequently formed row is displaced by pushers 24 to shuttle plates 22 and up against the other formed row(s) such that a complete layer is eventually formed thereon. Shuttle plates 22 then slide apart and the layer will drop onto pallet 10.

Supply station 12 for pallets 10 is formed here by pushers 20. Means 23 for lifting a stack of pallets 10 are placed adjacently of the transporting members. On the underside of the transporting members, or at low level, a roller conveyor 21 is provided for discharging a loaded pallet 10 consisting of a pallet 10 with a number of layers of products 15 stacked thereon.

Pushers 20 ensure that a pallet 10 is placed on bearing surfaces 4 located at high level. Lifting means 23 carry the stack of pallets 10 upward so that a new pallet 10 lies ready in supply station 12 for later placing on (other) bearing surfaces 4. From supply station 13 for products 15 a layer of products 15 is fed and placed on top of pallet 10 on bearing surfaces 4. Prior to feeding of a following layer of products 15 pallet 10 is carried downward through a distance the height of the already placed layer of products 15. Prior to or during discharge of loaded pallet 10 at low level using roller conveyor 21, the following pallet 10 for loading is placed onto bearing surfaces 4 by pushers 20.

Subject to the stacking height on pallet 10, two or more bearing surfaces 4 are provided per frame at equal mutual distance on the periphery of endless transporting members 2. It is hereby possible to buffer a pallet 10 before it is discharged. That is, while the loaded pallet is still situated on the bearing surfaces and is being carried downward for discharge, a following pallet can be loaded.

A marked capacity increase is obtained due to the minimal time for pallet-changing. The movement of the vertical transport of pallet 10 with products 15 stacked thereon progresses smoothly because it is a continuous movement.

The modularity of the whole apparatus enables adjustment, optionally to an existing situation, of the feed direction of the products and the supply and discharge direction of the pallet.

It is thus possible in the apparatus of fig. 4 to place feed conveyor 16 and turning station 17 in line with roller conveyor 18, parking plate 19 and shuttle plates 22. The feed of products 15 hereby takes place in a straight line.

Due to the modularity of the whole apparatus it is likewise possible, when several apparatuses are placed mutually adjacently, for loaded pallets 10 to be as it were discharged from the one apparatus through the other apparatus between the transporting members thereof, wherein use is made of one and the same roller conveyor running between the transporting members. The discharge direction of the pallet is herein at a right angle to the supply direction of the pallets and the feed direction of the products. Three advantages are hereby obtained. Firstly, space is saved. Secondly, there are fewer disruptions since fewer mechanical parts, and therefore also fewer movements, are required to discharge a pallet. Finally, a cost-saving is achieved since the discharge transport is simpler and, because fewer drive means are required, less energy is consumed.

## Claims

1. Apparatus for automatic stacking of products on a pallet (10), comprising a frame, supply stations for respectively pallets and products (12 resp. 13) located on the top side relative to the frame, a discharge station (15) for loaded pallets located at a lower level, transport means (2,3,4) supported in the frame for carrying pallets for loading downward from the supply station to the discharge station, and a pallet-bearing surface (4) provided on the transport means which lies horizontally, **characterized in that** the transport means (2,3,4) comprise two endless transporting members (2,3), the active part of which runs vertically, wherein two or more pallet bearing surfaces (4) are provided per frame which are arranged at the endless transporting members and lie horizontally at least in the active part.

2. Apparatus as claimed in claim 1, **characterized in that** two frames with transporting members (2,3) and bearing surface(s) (4) are disposed mirror-symmetrically relative to each other, wherein the bearing surfaces (4) of the two frames lie at the same height at least in the active part.

3. Apparatus as claimed in claim 1 or 2, **characterized in that** the transporting members are formed by an endless chain (2) with synchronously driven chain wheels (3).

4. Apparatus as claimed in any of the foregoing claims, **characterized in that** means (6,11) are arranged for pivoting the bearing surface (4).

5. Apparatus as claimed in any of the foregoing claims, **characterized in that** the supply station (12) for pallets comprises means (23) for lifting a stack of pallets.

6. Method for automatic stacking of products on a pallet, consisting of supplying an empty pallet at high level onto a first pallet bearing surface provided on endless transporting members, placing one layer of products each time onto the pallet from above, wherein prior to supply of a subsequent layer of products the pallet is carried downward each time through a distance the height of the layer of products, and discharging the loaded pallet at low level, **characterized in that** prior to or during discharge of the loaded pallet a subsequent pallet is supplied onto a second pallet bearing surface, above the loaded pallet in order to be loaded.

7. Method as claimed in claim 6, **characterized in that** the pallet for loading is carried continuously downward.

8. Method for automatic stacking of products using two or more apparatuses according to claim 1, wherein the two or more apparatuses are arranged adjacently, and wherein loaded pallets are discharged from the one apparatus through the other apparatus using the same conveyor.

## Patentansprüche

1. Vorrichtung zum automatischen Stapeln von Produkten auf einer Palette (10), umfassend einen Rahmen, Zufuhrstationen jeweils für Paletten und Produkte (12 bzw. 13), die auf der Oberseite relativ zum Rahmen positioniert sind, eine Entladestation (15) für auf einem tieferen Niveau positionierte beladene Paletten, Transportmittel (2, 3, 4), die im Rahmen zum Abwärts-Fördern von Paletten zum Beladen von der Zufuhrstation zur Entladestation gehalten werden, und eine auf dem Transportmittel vorgesehene palettentragende Oberfläche (4), die horizontal liegt, **dadurch gekennzeichnet, dass** die Transportmittel (2, 3, 4) zwei Endlostransportelemente (2, 3) umfassen, deren aktiver Teil vertikal läuft, wobei zwei oder mehr palettentragende Oberflächen (4) pro Rahmen vorgesehen sind, die an den Endlostransportelementen angeordnet sind und zumindest im aktiven Teil horizontal liegen.

2. Vorrichtung gemäß Anspruch 1, **dadurch gekennzeichnet, dass** zwei Rahmen mit Transportelementen (2, 3) und tragenden Oberfläche(n) (4) relativ zueinander spiegelsymmetrisch angeordnet sind, wobei die tragenden Oberflächen (4) der zwei Rahmen zumindest im aktiven Teil auf derselben Höhe liegen.

3. Vorrichtung gemäß Anspruch 1 oder 2, **dadurch gekennzeichnet, dass** die Transportelemente durch eine Endloskette (2) mit synchron angetriebenen Kettenrädern (3) gebildet sind.

4. Vorrichtung gemäß einem der vorstehenden Ansprüche, **dadurch gekennzeichnet, dass** Mittel (6, 11) zum Schwenken der tragenden Oberfläche (4) angeordnet sind.

5. Vorrichtung gemäß einem der vorstehenden Ansprüche, **dadurch gekennzeichnet, dass** die Zufuhrstation (12) für Paletten Mittel (23) zum Heben eines Stapels von Paletten umfasst.

6. Verfahren zum automatischen Stapeln von Produkten auf einer Palette, bestehend aus Zuführen einer leeren Palette auf oberem Niveau auf eine erste palettentragende Oberfläche, die auf Endlostransportmitteln vorgesehen ist, jedes Mal Platzieren einer Lage aus Produkten auf die Palette von oben, wobei vor der Zufuhr einer nachfolgenden Lage von Produkten die Palette jedes Mal um eine Distanz in der Höhe der Lage aus Produkten abwärts getragen wird, und Entladen der Palette auf unterem Niveau, **dadurch gekennzeichnet, dass** vor oder während des Entladens der beladenen Palette eine nachfolgende Palette auf einer zweiten palettentragenden Oberfläche oberhalb der beladenen Palette zugeführt wird, um beladen zu werden.

7. Verfahren gemäß Anspruch 6, **dadurch gekennzeichnet, dass** die zu beladende Palette kontinuierlich abwärts getragen wird.

8. Verfahren zum automatischen Stapeln von Produkten unter Verwendung von zwei oder mehr Vorrichtungen nach Anspruch 1, wobei die zwei oder mehr Vorrichtungen nebeneinander angeordnet sind und wobei die beladenen Paletten aus der einen Vorrichtung durch die, denselben Förderer verwendende andere Vorrichtung entladen werden.

## Revendications

1. Dispositif pour l'empilage automatique de produits sur une palette (10), comprenant un châssis, des stations d'alimentation pour les palettes et les produits (12 et 13 respectivement) situés respectivement sur le côté supérieur par rapport au châssis, une station de décharge (15) pour les palettes chargées, située à un niveau inférieur, des moyens de transport (2, 3, 4) supportés dans le châssis pour supporter des palettes pour le chargement vers le bas de la station d'alimentation à la station de décharge, et une surface d'appui de palette (4) prévue sur les moyens de transport qui sont disposés de manière horizontale, **caractérisé en ce que** les moyens de transport (2, 3, 4) comprennent deux éléments de transport sans fin (2, 3), dont la partie active s'étend verticalement, dans lequel on prévoit deux ou plusieurs surfaces d'appui de palette (4) par châssis, qui sont agencées au niveau des éléments de transport sans fin et sont disposées horizontalement au moins dans la partie active.

2. Dispositif selon la revendication 1, **caractérisé en ce que** deux châssis avec des éléments de transport (2, 3) et une (des) surface(s) d'appui (4), sont disposés entre eux avec une symétrie de type miroir, dans lequel les surfaces d'appui (4) des deux châssis se trouvent à la même hauteur au moins dans la partie active.

3. Dispositif selon la revendication 1 ou 2, **caractérisé en ce que** les éléments de transport sont formés par une chaîne sans fin (2) avec des roues de chaîne (3) entraînées de manière synchrone.

4. Dispositif selon l'une quelconque des revendications précédentes, **caractérisé en ce que** les moyens (6, 11) sont agencés pour faire pivoter la surface d'appui (4).

5. Dispositif selon l'une quelconque des revendications précédentes, **caractérisé en ce que** la station d'alimentation (12) pour palettes, comprend des moyens (23) pour lever une pile de palettes.

6. Procédé d'empilage automatique de produits sur palette, comprenant les étapes consistant à alimenter une palette vide à un niveau supérieur sur une première surface d'appui de palette prévue sur des éléments de transport sans fin, placer une couche de produits sur la palette chaque fois à partir du dessus, dans lequel avant l'alimentation d'une couche suivante de produits, la palette descend chaque fois sur une distance égale à la hauteur de la couche de produits, et décharger la palette chargée au niveau inférieur, **caractérisé en ce qu'**avant ou pendant le déchargement de la palette chargée, une palette suivante est alimentée sur une seconde surface d'appui de palette, au dessus de la palette chargée, afin d'être chargée.

7. Procédé selon la revendication 6, **caractérisé en ce que** la palette qui doit être chargée, descend de manière continue.

8. Procédé pour l'empilage automatique de produits utilisant deux ou plusieurs dispositifs selon la revendication 1, dans lequel les deux ou plusieurs dispositifs sont agencés de manière adjacente, et dans lequel les palettes chargées sont déchargées d'un dispositif à un autre en utilisant le même convoyeur.
